(19) Europäisches Patentamt
European Patent Office
Office européen des brevets

(11) **EP 1 478 900 B1**

(12) **EUROPÄISCHE PATENTSCHRIFT**

(45) Veröffentlichungstag und Bekanntmachung des Hinweises auf die Patenterteilung:
**14.10.2015 Patentblatt 2015/42**

(21) Anmeldenummer: **03714712.1**

(22) Anmeldetag: **22.01.2003**

(51) Int Cl.:
*G01D 5/14* (2006.01)  *G01D 5/16* (2006.01)
*G01D 5/245* (2006.01)  *G01D 5/04* (2006.01)
*F16H 1/12* (2006.01)  *F16H 49/00* (2006.01)
*F16H 1/24* (2006.01)  *H02K 49/10* (2006.01)

(86) Internationale Anmeldenummer:
**PCT/EP2003/000574**

(87) Internationale Veröffentlichungsnummer:
**WO 2003/069281 (21.08.2003 Gazette 2003/34)**

(54) **GETRIEBE SOWIE MIT DIESEM GETRIEBE AUSGESTATTETER DREHGEBER**

GEAR MECHANISM AND A ROTARY ENCODER EQUIPPED WITH THIS GEAR MECHANISM

MECANISME DE TRANSMISSION ET CODEUR DE ROTATION EQUIPE DUDIT MECANISME

(84) Benannte Vertragsstaaten:
**AT BE BG CH CY CZ DE DK EE ES FI FR GB GR HU IE IT LI LU MC NL PT SE SI SK TR**

(30) Priorität: **16.02.2002 DE 10206543**

(43) Veröffentlichungstag der Anmeldung:
**24.11.2004 Patentblatt 2004/48**

(73) Patentinhaber: **Dr. Johannes Heidenhain GmbH 83292 Traunreut (DE)**

(72) Erfinder:
• **BRANDL, Alois**
**83313 Siegsdorf (DE)**
• **MITTERREITER, Johann**
**83339 Chieming (DE)**
• **SCHWABE, Michael**
**83093 Bad Endorf-Hemhof (DE)**

(56) Entgegenhaltungen:
DE-A- 2 426 125    DE-A- 19 820 014
JP-A- 03 107 658    US-A- 3 814 962

**Beschreibung**

Die Erfindung betrifft ein Getriebe gemäß dem Anspruch 1 sowie einen mit diesem Getriebe ausgestatteten Drehgeber gemäß Anspruch 15.

Neben Winkelmessgeräten, die eine Winkelmessung an einer drehbaren Welle in inkrementalen Messschritten ermöglichen, sind auch sogenannte absolute Winkelmessgeräte, auch als Code-Drehgeber bezeichnet, bekannt. Diese gestatten eine Absolutwinkel-Bestimmung innerhalb einer einzigen Wellenumdrehung. Ist zudem die Erfassung der Anzahl erfolgter Wellenumdrehungen nötig, so werden üblicherweise sogenannte Multiturn-Drehgeber eingesetzt. In derartigen Multiturn-Drehgebern erfolgt die Bestimmung der absoluten Winkelposition innerhalb einer Wellenumdrehung, d.h. zwischen 0° und 360°, über eine mit der Welle verbundene Codescheibe, die mit Hilfe einer geeigneten fotoelektrischen Abtasteinheit abgetastet wird. Zur Gewinnung der erforderlichen Informationen über die Anzahl der erfolgten Wellenumdrehungen ist üblicherweise ein Untersetzungsgetriebe vorgesehen, über das eine oder mehrere weitere Teilscheiben bzw. Codescheiben bei sich drehender Welle in eine Drehbewegung mit geringerer Umdrehungszahl versetzt werden. Häufig sind diese Codescheiben als magnetisierte Scheiben ausgebildet, die jeweils zumindest einen Nordpol- und Südpol-Sektor aufweisen. Die Drehlage dieser zusätzlichen Codescheiben wird üblicher-weise mit geeigneten Abtasteinheiten, insbesondere Hall-Sensoren, in bekannter Art und Weise erfasst. Aufgrund der vorgegebenen Untersetzung der Drehbewegung der zusätzlichen Codescheiben lässt sich so die Zahl der erfolgten Umdrehungen der Welle ermitteln. Eine Messung der Absolutposition der angetriebenen Welle ist somit auch über mehrere Umdrehungen hin möglich.

Bei derartigen Untersetzungsgetrieben ist es vorteilhaft, wenn die erste Untersetzungsstufe ein möglichst hohes Untersetzungsverhältnis aufweist, so dass die Zahnräder der nachfolgenden Getriebestufen bereits mit erheblich geringerer Drehzahl umlaufen. Auf diese Weise wird die Belastung der nachfolgenden Getriebestufen signifikant reduziert.

Ein entsprechend aufgebauter Multiturn-Drehgeber ist beispielsweise aus der DE 198 20 014 A1 der Anmelderin bekannt. In dieser Druckschrift wird eine integrierte Bauweise von elektronischen Komponenten von Drehgebern beschrieben.

Aus der DE 2426125 A ist ein zweistufiges Rädergetriebe bekannt, welches über einen Spiralgang verfügt, in das ein Kronenzahnkranz eingreift. Derartige Getriebe haben unter anderem den Nachteil, dass sie vergleichsweise schwergängig und verschleißträchtig sind.

In der DE 197 45 177 A1 ist eine Getriebeanordnung gezeigt, bei der an den Umfangsflächen eines Antriebs- und eines Abtriebsrads permanentmagnetische beziehungsweise ferromagnetische wendelförmige Stege angeordnet sind. Für die Übertragung von Drehbewegungen zwischen zwei orthogonal zueinander angeordneten Achsen wird zudem in der Patentschrift US 3814962 ein Schneckengetriebe mit magnetischen Flanken vorgeschlagen. Diese Bauweisen sind insofern ungünstig, weil ein vergleichsweise großer Bauraum, insbesondere bezüglich der Außenmaße in Radialrichtung, benötigt wird.

Schließlich sind in der japanischen Offenlegungsschrift JP 03-568356 A verschiedene Bauarten für magnetisierte Getriebe gezeigt, welche bedingt durch ihre Konstruktion nur für vergleichsweise geringe Untersetzungen geeignet sind.

Der Erfindung liegt daher die Aufgabe zugrunde, ein Getriebe zu schaffen, das kleine Baumaße aufweist und einen geringen Fertigungs- und Kostenaufwand verursacht.

Diese Aufgabe wird erfindungsgemäß durch die Merkmale des Anspruches 1 gelöst.

Weiterhin soll das Getriebe gemäß Anspruch 15 in einem Drehgeber eingesetzt werden.

Die mit der Erfindung erzielten Vorteile bestehen insbesondere darin, dass nun durch das Getriebe ein sehr großes Untersetzungsverhältnis erreicht werden kann, und gleichzeitig der Außendurchmesser des kompletten Drehgebers klein gehalten wird. Darüber hinaus ist auch der in Axialrichtung erforderliche Bauraum vergleichsweise gering. Hinzu kommt, dass das erfindungsgemäße Getriebe eine vergleichsweise geringe Massenträgheit aufweist, was gerade bei hoch dynamischen Änderungen von Drehbewegungen von Vorteil ist.

Vorteilhafte Ausbildungen der Erfindung entnimmt man den abhängigen Ansprüchen.

Im folgenden Text ist als Stirnseite des Antriebs- bzw. Abtriebselements eine Fläche zu verstehen, die im Wesentlichen Senkrecht zu seiner Drehachse liegt. Bei einem kreiszylinderförmigen Antriebs- bzw. Abtriebelement ist demnach unter Stirnseite nicht die Mantelfläche, sondern eine der Kreis-bzw. Ringflächen zu verstehen.

Mit Vorteil sind die Kraftübertragungsmittel des Getriebes als Permanentmagnete ausgestaltet. Dabei sind die Permanentmagneten am Antriebsrad entlang einer Spirallinie angeordnet und die Permanentmagneten am Abtriebselement beispielsweise entlang einer Kreislinie. Eine verbesserte Wirkung des Getriebes wird erzielt, wenn die Spirallinie am Antriebelement als Teil einer archimedischen Spirale ausgebildet ist. Zur Erhöhung der Magnetkräfte sind die Körper des Antriebsrads und des Abtriebsrads, auf denen die Permanentmagnete angebracht sind, bevorzugt aus einem Werkstoff hergestellt, der ein hohe relative Permeabilitätszahl aufweist, die zumindest den Wert 10 übersteigt, und insbesondere größer als 100 ist.

Weitere Einzelheiten und Vorteile des erfindungsgemäßen Getriebes sowie eines damit ausgestatteten Drehgebers ergeben sich aus der nachfolgenden Beschreibung von Ausführungsbeispielen anhand der beiliegenden Figuren.

Es zeigen die

Figur 1a  eine Draufsicht auf das Antriebsrad mit Permanentmagneten,
Figur 1b  eine Seitenansicht mit Teilschnitt des Antriebsrads mit Permanentmagneten,
Figur 1c  eine perspektivische Ansicht des Antriebsrads,
Figur 2a  eine Draufsicht auf das Abtriebsrad mit Permanentmagneten und Mitnehmerstiften,
Figur 2b  eine Seitenansicht mit Teilschnitt des Abtriebsrads mit Permanentmagneten und Mitnehmerstiften,
Figur 2c  eine perspektivische Ansicht des Abtriebsrads mit Permanentmagneten und Mitnehmerstiften,
Figur 2d  eine Draufsicht auf das Abtriebsrad mit innerhalb der Permanentmagneten angeordneten Mitnehmerstiften,
Figur 2e  eine Seitenansicht mit Teilschnitt des Abtriebsrads mit innerhalb der Permanentmagneten angeordneten Mitnehmerstiften,
Figur 3a  Seitenansicht des Antriebsrads und des Abtriebsrads in Betriebsstellung,
Figur 3b  eine perspektivische Ansicht des Getriebes mit Permanentmagneten und geneigter Abtriebsachse und Mitnehmerstiften,
Figur 3c  eine Seitenansicht mit Teilschnitt des Antriebsrads mit Permanentmagneten unterschiedlicher Steghöhe und mit einem Teil des Abtriebsrads,
Figur 3d  eine Teilansicht des Getriebes mit in Umfangsrichtung magnetisierten Permanentmagneten,
Figur 3e  eine Teilansicht des Getriebes mit in Umfangsrichtung magnetisierten Permanentmagneten in Kombination mit in Radialrichtung magnetisierten Permanentmagneten,
Figur 4  eine perspektivische Explosions-Ansicht des Abtriebsrads mit Permanentmagneten und Abschirmblech,
Figur 5a  eine Draufsicht auf das Antriebsrad mit Hohlkehlen,
Figur 5b  eine Seitenansicht mit Teilschnitt auf das Antriebsrad mit Hohlkehlen,
Figur 6a  eine Draufsicht auf das Abtriebsrad mit Kugeln in einem Kugelkäfig,
Figur 6b  eine Seitenansicht mit Teilschnitt auf das Abtriebsrad mit Kugeln in mit einem Kugelkäfig,
Figur 6c  eine perspektivische Explosions-Ansicht des Abtriebsrads mit einem Kugelkäfig und Kugeln,
Figur 7  eine räumliche Explosions-Darstellung eines erfindungsgemäßen Drehgebers mit Teilschnitten.

In den Figuren sind gleichwirkende Bauteile unterschiedlicher Ausführungsbeispiele mit identischen Bezugszeichen versehen.

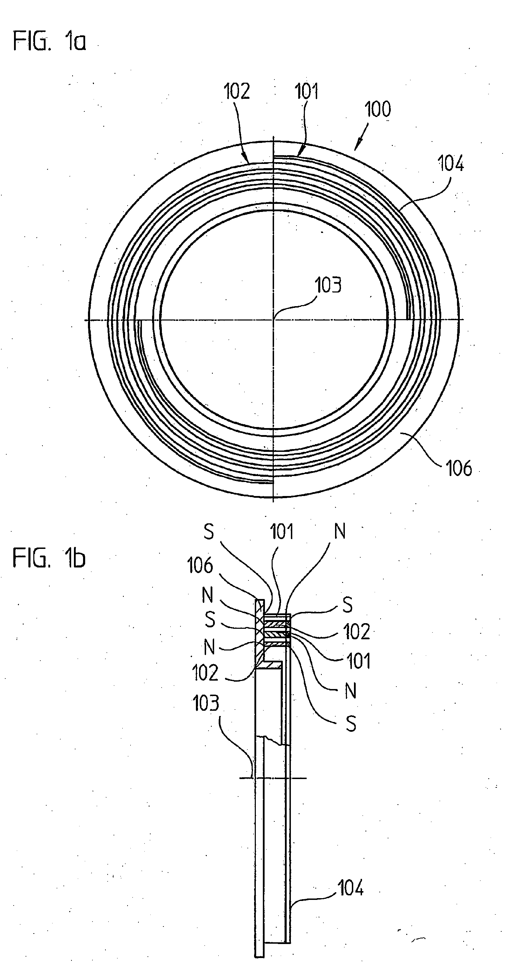

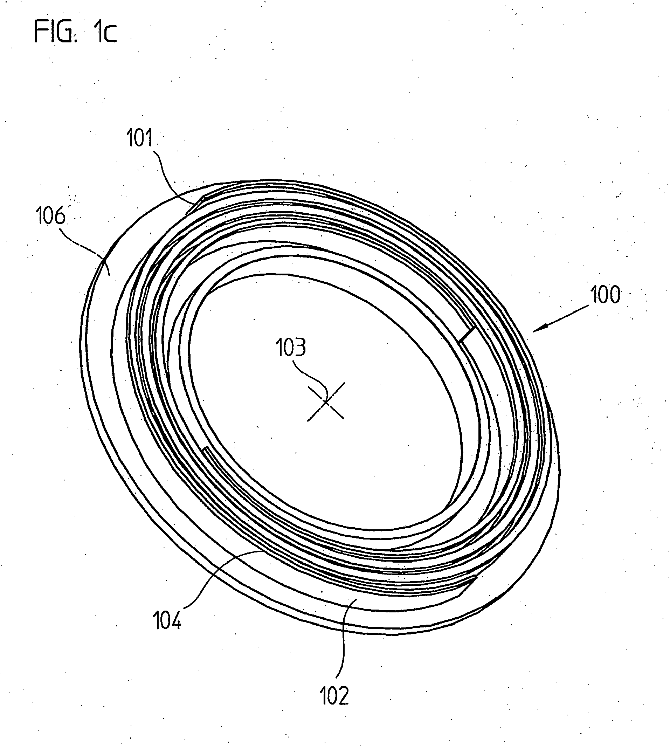

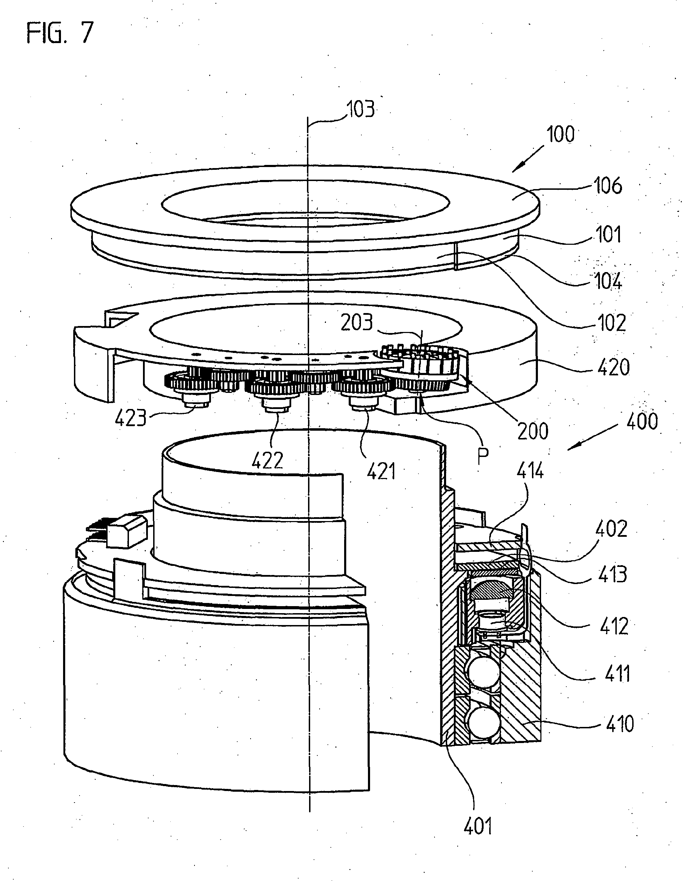

In der Figur 1a ist eine Draufsicht auf das Antriebsrad 100 des erfindungsgemäßen Getriebes dargestellt, wie es als erste Getriebestufe in einem Drehgeber 400 (Figur 7) eingebaut ist. Das Antriebsrad 100 weist eine große zentrische Bohrung zur Aufnahme einer in der Figur 7 dargestellten Hohlwelle 401 auf, deren Drehstellung im Betrieb des Drehgebers 400 gemessen wird. An einer Stirnseite des Antriebsrads 100 befinden sich, entlang jeweils einer Spirallinie ausgerichtet, zwei um 180° versetzt angeordnete längliche Permanentmagnete 101, 102 (Figur 1 b), auf denen jeweils ein spiralförmiges Blech 104 angeordnet ist, dessen Ränder entsprechend der Form der Permanentmagnete 101, 102 verlaufen. Das Blech 104 ist auf die Permanentmagneten 101, 102 aufgeklebt. Das Blech 104 ist aus einer ferromagnetischen Legierung, wodurch das magnetische Feld der Permanentmagnete 101, 102 verstärkt wird. Der Körper 106 des Antriebsrads 100 besteht aus einer ferromagnetischen FeNi-Legierung, die eine relative Permeabilitätszahl $\mu_r$ von mindestens 10, mit Vorteil 1000 aufweist. Im gezeigten Beispiel liegt $\mu_r$ bei ca. 3000.

In diesem Ausführungsbeispiel ist die Spirallinie als ein Teil einer archimedischen Spirale, gemäß der Gleichung $r = a \cdot \varphi$ ausgestaltet, wobei r der Radius der Spirale und a eine konstante positive Zahl ist. Als $\varphi$ ist der Schwenkwinkel (im Bogenmaß) eines Radialstrahls um den Pol der Spirallinie zu verstehen. Nachdem im gezeigten Beispiel die Spirale bezüglich des Antriebsrads 100 zentrisch angeordnet ist, liegt hier der Pol auf der Drehachse 103. Bei dieser Art von Spiralen haben je zwei aufeinanderfolgende Schnittpunkte eines beliebigen vom Pol der Spirale ausgehenden Strahls den gleichen Abstand, nämlich $2 \cdot \pi \cdot a$.

Die Permanentmagnete 101, 102 und das Blech 104 weisen in Radialrichtung eine unterschiedliche Dicke auf, wobei die dünnsten Bereiche am Anfang und am Auslauf der Permanentmagnete 101, 102 bzw. des Blechs 104 gegeben sind.

Die Permanentmagneten 101, 102 sind gemäß der Figur 1b bezüglich des Antriebsrads 100 in Achsrichtung magnetisiert, das heißt, dass die Verbindungslinie zwischen Nord- und Südpol eines Permanentmagneten 101, 102 im Wesentlichen parallel zur Drehachse 103 des Antriebsrads 100 verläuft. Die beiden spiralförmigen Permanentmagnete 101, 102 sind so angeordnet, dass bei dem einen Permanentmagneten 101 der Südpol zum Körper 106 des Antriebsrads 100 gerichtet ist, und bei dem anderen Permanentmagneten 102 der Nordpol.

In der Figur 1c ist das Antriebsrad 100 mit den Permanentmagneten 101, 102 und dem Blech 104 in einer perspektivischen Abbildung gezeigt.

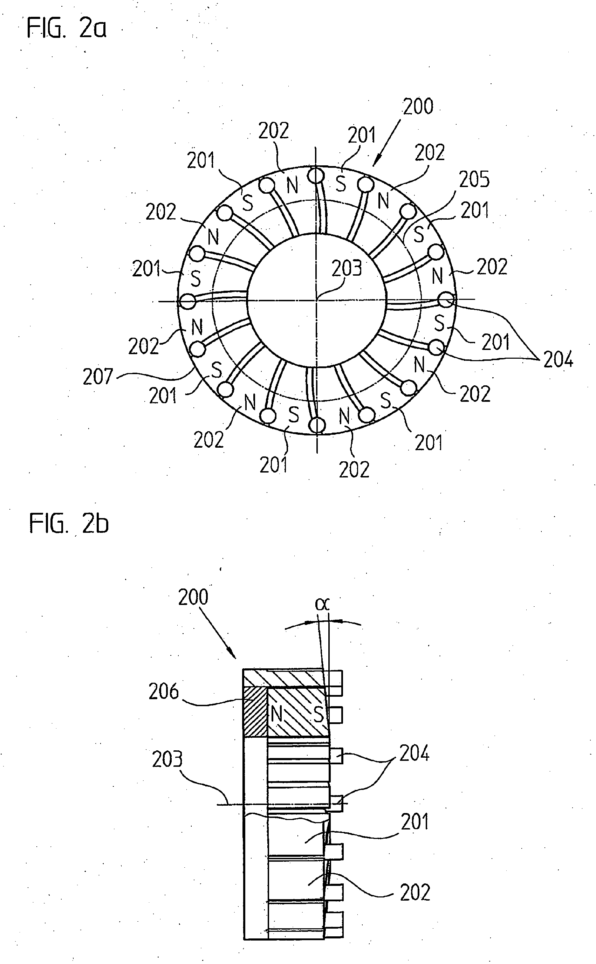

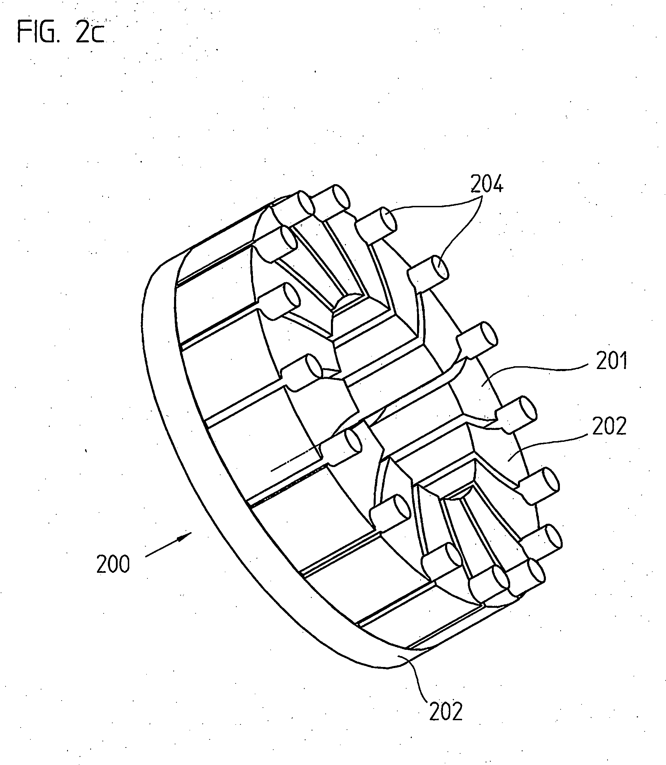

Das Abtriebsrad 200 weist gemäß den Figuren 2a, 2b und 2c ebenfalls Permanentmagnete 201, 202 auf. Diese sind entlang einer Kreislinie 205 an der Stirnseite des Abtriebsrads 200 angeordnet. Alternativ zu einer Kreislinie 205 können die Permanentmagnete 201, 202 auch beispielsweise entlang einer Ellipse angeordnet sein. Entscheidend für die Anordnung der Permanentmagnete 201, 202 ist es, dass sie entlang einer umlaufenden Linie platziert sind, das heißt, dass ein virtueller radial nach außen ausgerichteter Strahl ausgehend von der Drehachse 203 in jeder Winkelstellung zwischen 0° und 360° die umlaufende Linie schneidet. Die Randbereiche der Stirnflächen der Permanentmagnete 201, 202 sind bezüglich der Drehachse 203 radial nach außen um den Winkel $\alpha$, der in diesem Beispiel 5° beträgt, abgeschrägt (Figur 2b). Die Permanentmagnete 201, 202 sind auf dem Körper 206 des Abtriebsrads 200 aufgeklebt, der aus einer ferromagnetischen FeNi-Legierung besteht und wie beim Antriebsrad 100 die eine relative Permeabilitätszahl $\mu_r$ von mindestens 10, mit Vorteil 1000 aufweist. Im gezeigten Beispiel liegt $\mu_r$ auch hier bei ca. 3000. Durch diese vergleichsweise hohe relative Permeabilitätszahl wird das Magnetfeld signifikant verstärkt.

Die Permanentmagnete 201, 202 sind in Achsrichtung (bezüglich der Drehachse 203 des Abtriebsrads 200) magnetisiert und derart ausgerichtet, dass jeweils zwei benachbarte Permanentmagnete 201, 202 eine gegensinnige Magnetisierung aufweisen. Das heißt, dass beim Permanentmagnet 201 der Nordpol in Richtung des Körpers 206 des Abtriebsrads 200 weist, und beim benachbarten Permanentmagneten 202 der Südpol. Zwischen den Permanentmagneten 201, 202 sind sogenannte Mitnehmerstifte 204 aus Aluminium am Abtriebsrad 200 angebracht.

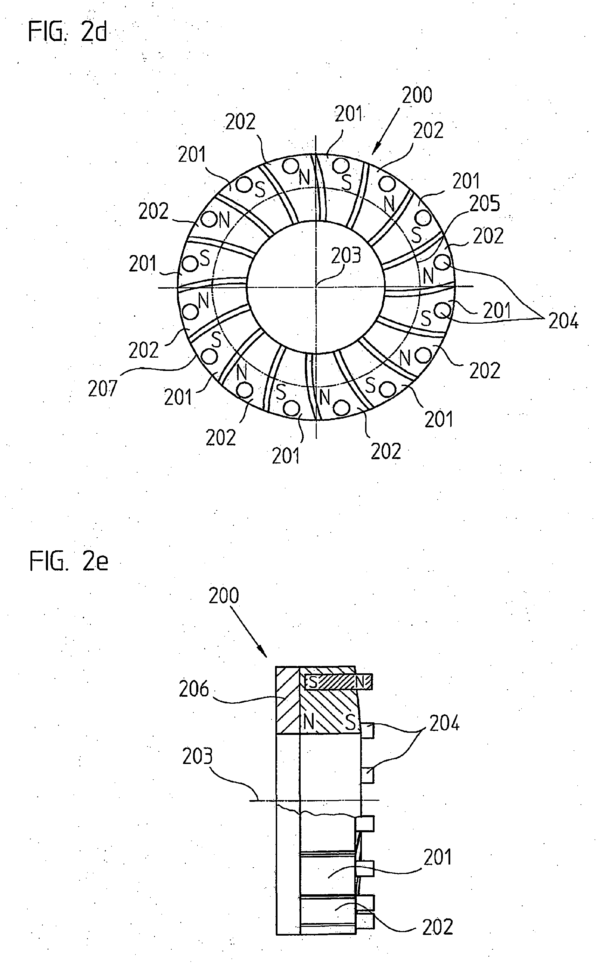

Alternativ dazu können die Mitnehmerstifte 204 nicht zwischen den Permanentmagneten 201, 202 angeordnet sein, sondern wie in den Figuren 2d und 2e dargestellt, um einen halben Polabstand drehversetzt innerhalb der Permanentmagnete 201, 202. Die Mitnehmerstifte 204 sind dann aus einem magnetisierbaren Material und selbst auch magnetisiert, mit einer Ausrichtung und Polung wie die Permanentmagnete 201, 202.

Alternativ zu den Mitnehmerstiften 204 als separate Bauteile können die Mitnehmerstifte 204 durch eine geeignete Formgebung der Permanentmagnete 201, 202 monolithisch in diese integriert sein.

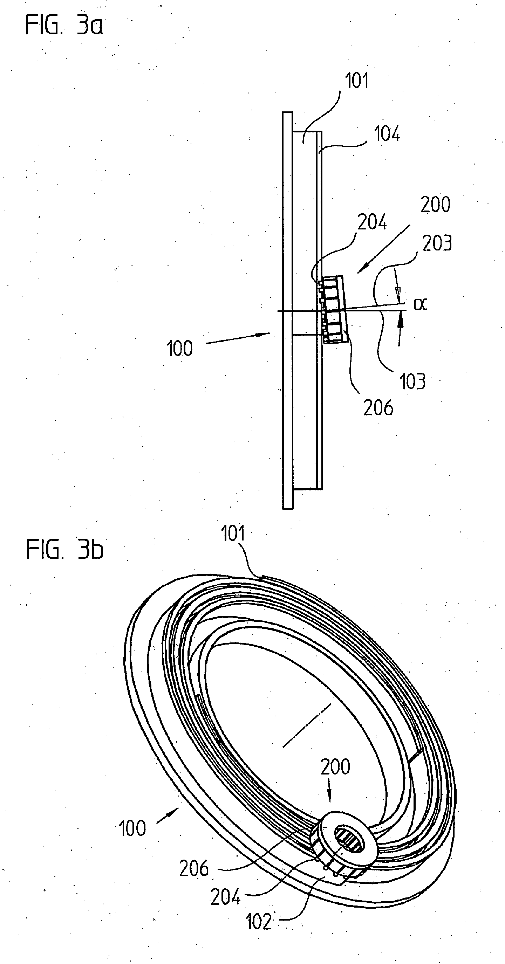

In der Figur 3a ist das Antriebsrad 100 in der betriebsgemäßen Lage relativ zum Abtriebsrad 200 dargestellt. Im Betrieb ist die Drehachse 103 des Antriebsrads 100 wie auch die Drehachse 203 des Abtriebsrads 200 ortsfest. Dadurch, dass die Drehachse 203 des Abtriebsrads 200 gegenüber der Drehachse 103 des Antriebsrads 100 um den Winkel $\alpha$ (= 5°) geneigt ist, ist der stirnseitige Abstand zwischen dem Antriebsrad 100 und dem Abtriebsrad 200 ortsabhängig unterschiedlich groß. Dies hat die Folge, dass die Magnetkräfte zwischen den Permanentmagneten 101, 102 des Antriebsrads 100 und den Permanentmagneten 201, 202 des Abtriebsrads 200 je nach Abstand bzw. Luftspalt ebenfalls unterschiedlich groß sind. Darüber hinaus sind die Mitnehmerstifte 204 im Bereich des großen Abstandes frei, das heißt, dass dessen Enden in diesem Bereich nicht in die Zwischenräume des spiralförmigen Bleches 104 ragen.

In der Figur 3b ist eine perspektivische Teilansicht des Getriebes mit dem Antriebsrad 100 und dem Abtriebsrad 200 in Betriebsstellung gezeigt.

Wird nun das Antriebsrad 100 in Gang gesetzt, so "fängt" der Nordpol des Permanentmagneten 101 den Südpol des Permanentmagneten 201 des Abtriebsrads 200 quasi ein, sobald sich ein ausreichend kleiner Luftspalt bzw. Abstand zwischen den Polen der Permanentmagneten 101, 201 des Antriebsrads 100 und des Abtriebsrads 200 einstellt. Es wird dadurch eine Kraftübertragung vom Antriebsrad 100 zum Abtriebsrad 200 erreicht. Dadurch, dass die Körper 106, 206 des Antriebsrads 100 und des Abtriebsrads 200 aus einer NiFe-Legierung bestehen, welche eine relative Permeabilitätszahl $\mu_r$ von ca. 3000 aufweist, wird das magnetische Feld und damit die übertragbare Kraft verstärkt, bzw. erhöht. Unterstützt wird diese Wirkung überdies durch das ferromagnetische, insbesondere hartmagnetische, Blech 104, welches zu einer Feldbündelung führt, und somit die Kraftausbeute weiter erhöht. Dadurch, dass die Drehbewegung um die Drehachse 103 des spiralförmigen Permanentmagneten 101 eine Richtungskomponente aufweist, die bezüglich des Abtriebsrads 200 tangential ausgerichtet ist, wird in das Abtriebsrad 200 ausgehend vom Antriebsrad 100 ein Drehmoment eingeleitet. Die Kraftübertragung findet im Wesentlichen in dem Bereich statt, in dem ein geringer Luftspalt vorherrscht. Durch die Neigung um den Winkel $\alpha$ ist gewährleistet, dass die Summe aller Magnetkräfte zwischen den Permanentmagneten 101, 201 des Antriebsrads 100 und des Abtriebsrads 200 eine Drehbewegung auslöst. Durch die in Radialrichtung ungleichmäßige Dicke des Permanentmagneten 101 und des Blechs 104 am Anfang und am Ende des Permanentmagneten 101 wird eine Verbesserung des Einfädelvorganges der Mitnehmerstifte 204 in den Zwischenraum zwischen die Spirallinien erreicht.

Das Untersetzungsverhältnis des Getriebes hängt einerseits von der Gangzahl der Spirallinie entlang welcher der Permanentmagnet 101 verläuft ab, und andererseits von der Anzahl der damit in Wirkverbindung bringbaren Permanentmagnete 201 des Abtriebsrads 200. In dem gezeigten Beispiel ist der Permanentmagnet 101 entlang einer eingängigen Spirallinle ausgerichtet, wobei dessen Nordpol zum Abtriebsrad 200 weist. Die Anzahl der dazugehörigen Südpole bzw. die Anzahl der entsprechenden Permanentmagnete 201 des Abtriebsrads 200 ist acht. Nachdem die Untersetzung der Quotient aus der Gangzahl der Spirallinie und der Anzahl der dazu in Wechselwirkung stehenden Permanentmagnete 201 des Abtriebsrads 200 ist, ergibt sich hier eine Untersetzung von 8 : 1. Das heißt, das Abtriebsrad 200 dreht sich im Betrieb achtmal langsamer als das Antriebsrad 100.

Zur Optimierung der Kraftausbeute und des Gleichlaufs des Getriebes ist die Form der Spirallinie des Permanentmagneten 101 mit der Anordnung der Permanentmagnete 201 aufeinander abgestimmt. Nachdem die Spirallinie, entlang welcher der Permanentmagnet 101 ausgerichtet ist, als archimedische Spirale ausgestaltet ist, ist wie oben erläutert, der konstante Abstand zwischen den Spirallinien als $2 \cdot \pi \cdot a$ gegeben. Im gezeigten Beispiel beträgt $2 \cdot \pi \cdot a = 4,4$

mm, bzw. a ≈ 0,7 mm.

Die acht Permanentmagnete 201 des Abtriebsrads 200 sind entlang einer Kreislinie 205 angeordnet, so dass eine Kreisfläche, durch Verlängerung der Außenkontur 207 der Permanentmagnete 201 gebildet werden kann. Die Abstände zwischen den Permanentmagneten 201 sind auf die Größe $2 \cdot \pi \cdot a = 4{,}4$ mm abgestimmt, und zwar so, dass in jeder Betriebsstellung ein Nordpol von einem Südpol "gefangen" wird. Geometrisch ausgedrückt bedeutet dies, dass ein gleichseitiges Achteck mit der Kantenlänge von $2 \cdot \pi \cdot a = 4{,}4$ mm vollständig innerhalb der oben beschriebenen Außenkontur 207 der Kreisfläche gelegt werden kann. Grundsätzlich kann festgestellt werden, dass es für die Wirkungsweise des Getriebes vorteilhaft ist, wenn folgendes geometrisches Kriterium erfüllt ist: Entsprechend der Anzahl n der gleichpoligen Permanentmagnete 201 des Abtriebsrads 200 wird ein n-Eck mit einer Kantenlänge von $2 \cdot \pi \cdot a$ gebildet. Dieses n-Eck kann so auf die Kreisfläche gelegt werden (jedes Eck auf einen Permanentmagneten 201), dass dieses vollständig innerhalb der Außenkontur 207 der Kreisfläche zu liegen kommt.

Für die Betrachtung der gegenpoligen Wirkverbindung gelten zu den oben angeführten Aussagen analoge Beziehungen. Der zweite Permanentmagnet 102 des Antriebsrads 100 ist demnach auch entlang einer eingängigen Spirallinie angeordnet. Dessen Südpol steht in Wechselwirkung mit den acht Nordpolen der Permanentmagnete 202 des Abtriebsrads 200. Das Untersetzungsverhältnis zwischen dem Permanentmagneten 102, welcher entlang einer eingängigen Spirallinie ausgerichtet ist, und den acht entsprechenden Permanentmagneten 202 des Abtriebsrad 200 ist demnach ebenfalls 8 : 1. Diese zusätzliche Wirkverbindung hat also keine Änderung des Untersetzungsverhältnisses gegenüber der oben beschriebenen Kraftübertragung zwischen den Permanentmagneten 101 und 201 zur Folge. Sie dient lediglich zur Erhöhung der Kraftausbeute bzw. zur Erhöhung des übertragbaren Drehmoments, weil auf dieses Weise die Permanentmagnete 101 und 102 im Zusammenspiel mit den Permanentmagneten 201 und 202 quasi parallel zueinander arbeiten. Gerade für die Anwendung des Getriebes bei Drehgebern ist diese parallele Arbeitsweise von Nord- und Südpol-Kopplungen von Vorteil, weil dadurch die Gefahr eines asynchronen Betriebes, das heißt, eines Schlupfes zwischen Antriebsrad 100 und Abtriebsrad 200, im Sinne einer präzisen Messung vermieden werden sollte.

Durch das erfindungsgemäße Getriebe kann das erforderliche Drehmoment ohne jegliche Berührung übertragen werden. Jedoch werden im gezeigten Beispiel ergänzend, zur Absicherung gegen etwaige asynchrone, also schlupfbehaftete, Betriebszustände die nichtmagnetischen Mitnehmerstifte 204 aus Aluminium im Abtriebsrad 200 verwendet. Anstelle von Aluminium kann auch ein anderer nichtmagnetischer Werkstoff, zum Beispiel Messing oder Bronze aber auch ein Kunststoff, z. B. PTFE oder PA verwendet werden. Darüber hinaus können, wie oben erwähnt, die Mitnehmerstifte 204 auch magnetisiert sein, und somit aus einem magnetischen Werkstoff bestehen. Diese Mitnehmerstifte 204 haben die Aufgabe das Abtriebsrad 200 auch dann noch synchron bzw. schlupffrei zum Antriebsrad 100 zu bewegen, wenn die Kraftkopplung durch die Permanentmagnete 101, 102, 201, 202 für die Übertragung des Drehmoments nicht mehr ausreichen sollte. Diese Gefahr besteht insbesondere dann, wenn bei hohen Drehbeschleunigungen Drehmomentspitzen auftreten aber auch bei Vorhandensein eines Störmagnetfeldes oder bei Vibrationen. Das Blech 104 gewährleistet, dass die Mitnehmerstifte nicht mit den Permanentmagneten 101, 102 des Antriebsrads 100 in Kontakt kommen, weil die Mitnehmerstifte 204 so kurz bemessen sind, dass sie nicht zu den Permanentmagneten 101, 102 reichen. Für den Fall, dass das auftretende Drehmoment so groß ist, dass die Mitnehmerstifte 204 zur Wirkung kommen, erfolgt die berührende Kraftübertragung zwischen den Mitnehmerstiften 204 und dem Blech 104. Ein möglicher Verschleiß der Permanentmagneten 101, 102 wird auf diese Weise vermieden.

Wie bereits oben erwähnt, sind die Mitnehmerstifte 204 gemäß in dem Ausführungsbeispiel gemäß Figur 2e magnetisiert. In diesem Fall kann auch schon ohne Kontakt oder mit verminderter Anpresskraft am Blech 104 bzw. an den Permanentmagneten 101, 102 ein Drehmoment übertragen werden.

Im übrigen ist der Verschleiß eines Getriebes gemäß dem beschriebenen Beispiel vernachlässigbar, weil im Normalbetrieb eine berührungslose Kraftübertragung gegeben ist.

Alternativ zu der beschriebenen Ausführung kann auch auf das Blech 104 verzichtet werden, dann können mit Vorteil die Flanken der Permanentmagnete 101, 102 des Antriebsrads 100 mit einer Hartstoffschicht versehen sein oder es können Verbundwerkstoffe eingesetzt werden.

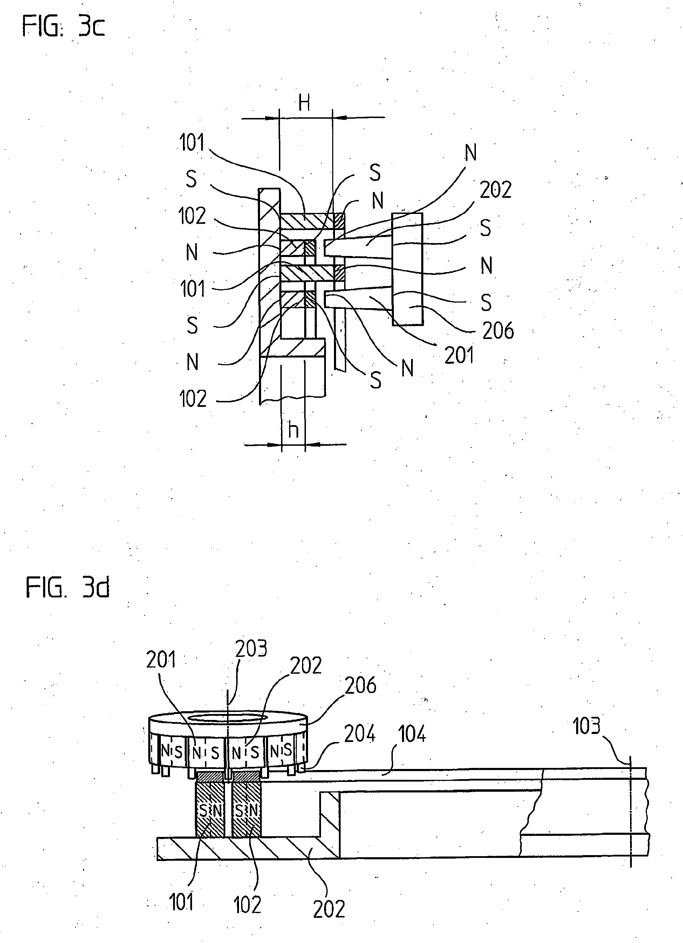

In der FIG 3c ist ein weiteres Ausführungsbeispiel gezeigt, welches sich dadurch auszeichnet, dass die Permanentmagnete 101, 102 unterschiedliche Steghöhen H, h aufweisen. Die Permanentmagnete 201, 202 greifen nun zwischen die Permanentmagnete 101, 102, ohne diese im Normalbetrieb des Getriebes zu berühren. Durch die Anziehungs- und Abstoßungskräfte der Permanentmagnete 101, 102, des Antriebsrads 100 und der Permanentmagnete 201, 202 des Abtriebsrads 200 wird eine entsprechende Kraft übertragen. Für den Fall, dass das Getriebe übermäßig belastet wird, wird eine Kraft durch Berührung der Permanentmagnete 101, 102, 201, 202 mechanisch übertragen. Zur Verschleißminderung für diesen Notbetrieb sind hier entsprechende Hartstoffbeschichtungen vorgesehen. Unterstützt wird diese Funktion auch durch die konisch gestalteten Permanentmagnete 201, 202 des Abtriebsrads 200.

Im übrigen können auch andere geometrische Formen, die von einer zylindrischen Form abweichen auch für die Mitnehmerstifte 204 der anderen Ausführun gsbeispiele gewählt werden, etwa zur Verbesserung der Notlaufeigenschaften.

Gemäß der Figur 3d ist ein weiteres Ausführungsbeispiel des Getriebes gezeigt, bei dem die Permanentmagnete 101, 102 in Radial- und die Permanentmagnete 201, 202 in Umfangsrichtung magnetisiert sind. Im Getriebe stehen sich demnach pro Permanentmagnet 101, 102, 201, 202 jeweils vier Magnetpole gegenüber. Bei einer relativen Verschiebung zwischen den Permanentmagneten 101, 102 des Antriebsrads 100 und den Permanentmagneten 201, 202 des Abtriebsrads 200 infolge des zu übertragenden Drehmoments, wirken die magnetischen Kräfte der Pole dieser Verschiebung entgegen und führen somit zu einem vergleichsweise steifen Kraftübertragungsverhalten des Getriebes.

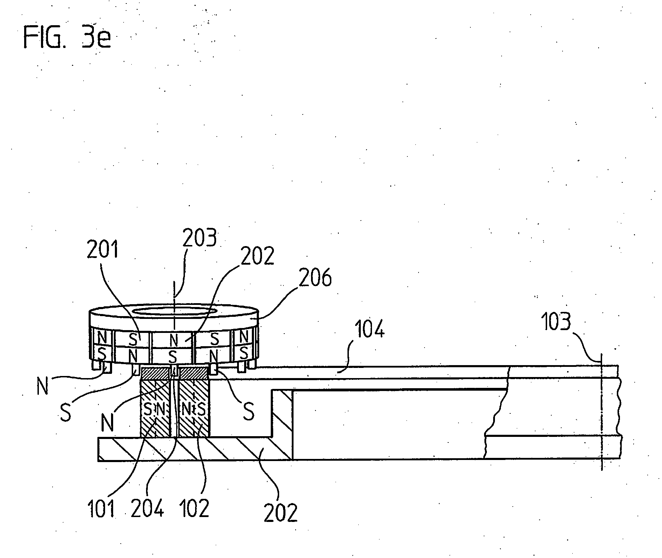

In einer weiteren Variante des erfindungsgemäßen Getriebes können gemäß der Figur 3e die Permanentmagneten 101, 102 wie im vorhergehenden Ausführungsbeispiel in Radialrichtung magnetisiert sein, jedoch derart, dass sich gleichnamige Pole gegenüberstehen. Im gezeigten Beispiel steht der Nordpol des Permanentmagneten 101 dem Nordpol des Permanentmagneten 102 gegenüber. Die Permanentmagneten 201, 202 des Abtriebsrads 200 sind dagegen in Axialrichtung magnetisiert. Analog zur Figur 2e sind darüber hinaus die Mitnehmerstifte 204 ebenfalls magnetisiert, und zwar so, dass der Nordpol eines Mitnehmerstiftes 204 zwischen die beiden Nordpole der Permanentmagnete 101, 102 des Antriebsrads 100 ragt. Im Betrieb wird also der Südpol des Permanentmagneten 202 des Abtriebsrads 200 von den beiden Nordpolen der Permanentmagneten 101, 102 angezogen, so dass das System den kürzesten Abstand zwischen den ungleichnamigen Polen anstrebt. Unterstützt wird diese Funktion durch die abstoßenden Kräfte zwischen dem Nordpol des Mitnehmerstiftes 204 und den Nordpolen der Permanentmagnete 101, 102. Die Mitnehmerstifte 204 tragen also in dieser Bauweise zur Zentrierung der Abtriebsrads 200 gegenüber den Permanentmagneten 101, 102 des Antriebsrads 100 bei, und führen letztlich zu einer Steigerung des berührungslos übertragbaren Drehmomentes.

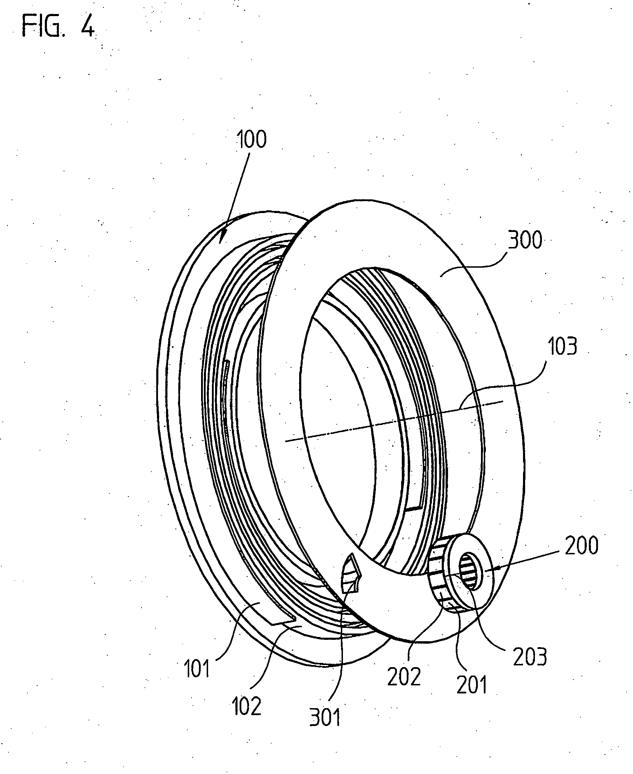

In der Figur 4 ist ein weiteres Ausführungsbeispiel gezeigt, bei dem die Kraftübertragung auch durch Permanentmagnete 101, 102, 201, 202 erfolgt. Allerdings wurde hier eine Anordnung gewählt, bei der die Drehachsen 103, 203 des Antriebsrads 100 und des Abtriebsrads 200 parallel ausgerichtet sind. Dies hat insbesondere für die folgenden Getriebestufen Vorteile, weil dadurch die Achsen aller Zahnräder parallel zur Drehachse 103 ausgerichtet sein können, so dass keine Kegelradstufe oder dergleichen eingesetzt werden muss.

Die parallele Ausrichtung der Drehachsen 103, 203 wird letztlich durch ein Abschirmblech 300 ermöglicht, in das ein Fenster 301 eingearbeitet ist. Das Abschirmblech 300 besteht ebenfalls aus einer NiFe-Legierung mit einer vergleichsweise hohen relativen Permeabilitätszahl, welches die Eigenschaft hat Magnetfelder signifikant abzuschwächen. Alternativ dazu kann auch eine SiFe-Legierung oder amorphe bzw. nanokristalline Legierungen mit hoher relativer Permeabilitätszahl eingesetzt werden. Auf diese Weise kann die magnetische Kopplung zwischen dem Antriebsrad 100 und dem Abtriebsrad 200 räumlich auf den Bereich des Fensters 301 eingegrenzt werden. Die übrige Fläche des Abtriebsrads 200 wird durch das Abschirmblech 300 weitgehend magnetisch isoliert, so dass in diesem Bereich das übertragbare Drehmoment nahezu Null ist.

Alternativ zu einer umlaufenden ringförmigen Form das Abschirmblechs 300 kann auch nur eine Ringsegmentform gewählt werden, die nur den relevanten Wirkbereich abdeckt.

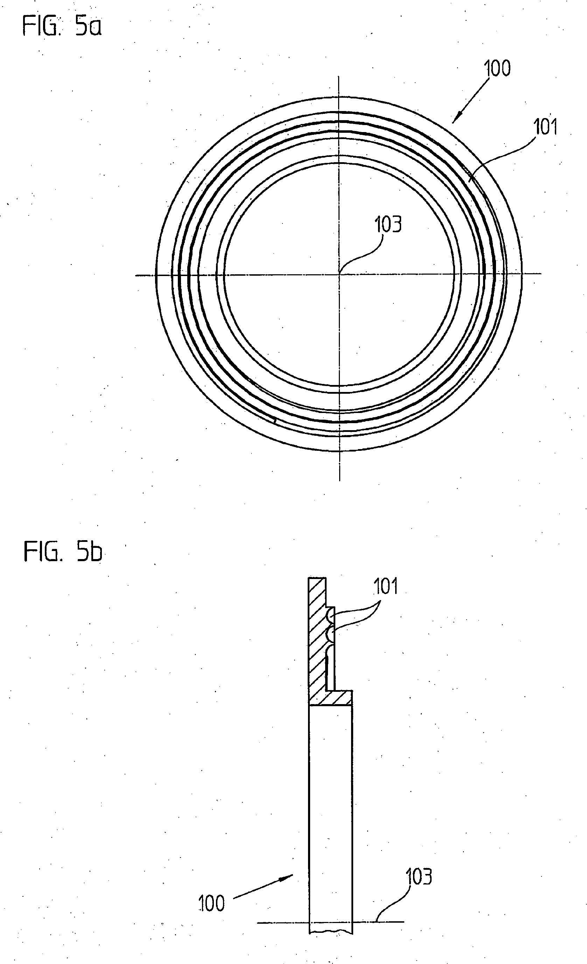

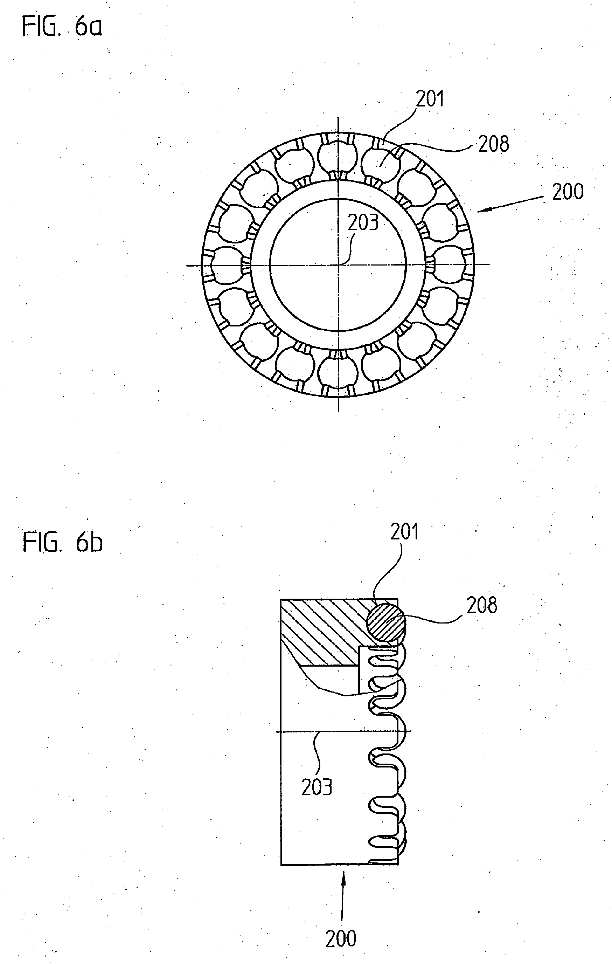

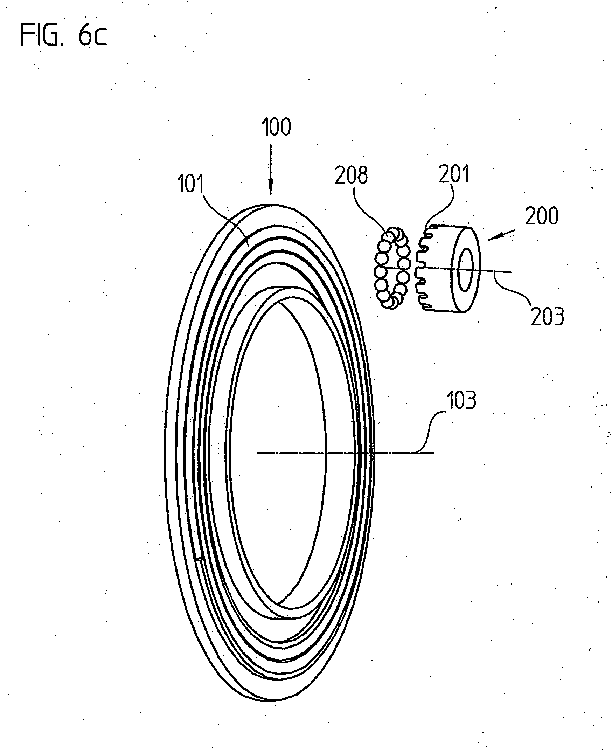

Als ein weiteres Ausführungsbeispiel wird im Folgenden eine Anordnung gemäß den Figuren 5a bis 6c beschrieben, bei der das Kraftübertragungselement des Antriebsrads 100 eine entlang einer Spirallinie ausgerichtete Hohlkehle 101 ist. In diese Hohlkehle 101 greifen Kugeln 208, die in einem Kugelkäfig 201 des Abtriebsrads 200 gelagert sind. Der Kugelkäfig 201 ist gemäß der Figur 6b dabei so gestaltet, dass in diesem einerseits die Kugeln 208 um alle Achsen frei drehbar, und andererseits gegen herausfallen axial gesichert sind. Der Kugelkäfig 201 bzw. das gesamte Abtriebsrad 200 ist im gezeigten Beispiel aus Kunststoff hergestellt, so dass die Kugeln 208 durch Einschnappen in den Kugelkäfig 201 montiert werden können.

Das Abtriebsrad 200 weist entsprechend der Figur 6a sechzehn Kugeln 208 auf, die mit einer Hohlkehle 101 (eingängige Spirale) in Wechselwirkung stehen. Aus diesen Angaben lässt sich das Untersetzungsverhältnis von 16: 1 bestimmen.

Im zusammengebauten Zustand ist auch in diesem Ausführungsbeispiel die Drehachse 103 des Antriebsrads 100 gegenüber der Drehachse 203 des Abtriebsrads 200 geneigt. Im Gegensatz zu den Ausführungsbeispielen mit der berührungslosen Kraftübertragung entstehen in diesem Beispiel mit den berührenden Kraftübertragungsmitteln Reibungsverluste und Verschleiß. Diese Effekte können durch eine Schmierung des Getriebes und durch die Verwendung von geeigneten Werkstoffpaarungen reduziert werden. Insbesondere kann der Verschleiß dadurch gesenkt werden, dass die Wälzpartner, nämlich die Hohlkehle 101, die Kugel 208 und der Kugelkäfig 201, allesamt oder teilweise mit einer verschleißmindernden Hartstoffschicht versehen sind, zum Beispiel mit einer Wolframkarbidschicht in Kombination mit gleitfähigen Kunststoffen. Der Kugelkäfig 201 kann vorzugsweise aus Sintermetall mit eingelagerten Schmierstoffen hergestellt sein. Alternativ dazu können die Kugeln 208 und/oder die übrigen Wälzpartner aus Keramikmaterial bestehen.

Das Getriebe ist, wie in der Figur 7 dargestellt, in einem Multiturn-Drehgeber 400 zur Bestimmung der absoluten Winkelposition eingebaut. Das Antriebsrad 100 des Getriebes ist mit seiner großen zentrischen Bohrung mit einer Hohlwelle 401 des Drehgebers 400 drehfest verbunden. Die Hohlwelle 401 nimmt ihrerseits drehfest eine nicht dargestellte Welle auf, deren Drehstellung im Betrieb des Drehgebers 400 zu messen ist. An einem Absatz der Hohlwelle 401 ist eine Codescheibe 402 befestigt, in diesem Beispiel festgeklebt, so dass die Codescheibe 402 mit der gleichen Drehzahl wie die Hohlwelle 401 im Messbetrieb rotiert. Zur Erfassung der absoluten Position innerhalb einer Umdrehung der Hohlwelle 401 trägt die Codescheibe 402 einen mehrspurigen Code, in der Regel ein Gray-Code, wobei die feinste Spur eine hochauflösende Inkrementalspur ist, die vorteilhafterweise möglichst weit außen am Umfang der Codescheibe 402 angeordnet ist, um möglichst viele Teilungsperioden über den Umfang anordnen zu können. Je mehr Teilungsperioden über den gesamten Umfang angeordnet sind, desto höher ist die zu erfassende Winkelauflösung des Drehgebers.

Im nicht rotierenden Gehäuse 410 des Drehgebers 400 befindet sich eine Lichtquelle 411, eine Linse 412 und eine Abtastplatte 413. Darüber hinaus ist mit dem Gehäuse 410 eine Platine 414, an deren Unterseite Fotodetektoren angebracht sind, drehfest verbunden. Mit Hilfe dieser optischen Winkelabtasteinrichtung werden inkremental und/oder absolut die jeweilige Winkelposition innerhalb einer Umdrehung der Hohlwelle 401 bestimmt.

Zur Multiturn-Messung wird das erfindungsgemäße Getriebe und die damit zusammenwirkenden weiteren Getriebestufen benötigt. Diese sind in einem Getriebekasten 420 integriert, dessen Außenwandung in der Figur 7 der Übersichtlichkeit halber teilweise weggelassen wurde. Der Getriebekasten 420 ist drehfest mit dem Gehäuse 410 verbunden und nimmt somit nicht an der Rotationsbewegung der Hohlwelle 401 bzw. des Antriebsrads 100 teil. Die Drehachse 203 des Abtriebsrads 200 ist dagegen auch gegenüber dem Getriebekasten 420 und damit gegenüber dem Gehäuse 410 nicht bewegbar. Die Drehbewegung der Hohlwelle 401 wird vom Antriebsrad 100 mit der gegebenen Untersetzung schlupffrei auf das Abtriebsrad 200 übertragen, welches im Lager P drehbar um die Drehachse 203 gegenüber dem Getriebekasten 420 gelagert ist. Drehfest mit dem Abtriebsrad 200 ist ein Zahnrad verbunden, das mit einem Zahnrad einer weiteren Untersetzungsstufe kämmt. An der Welle dieser weiteren Untersetzungsstufe ist eine Teilscheibe 421 mit einer magnetischen Teilung befestigt. Darüber hinaus sind weitere Getriebestufen mit weiteren Teilscheiben 422 und 423 entsprechend angeordnet. Die Drehachsen der Teilscheiben 421, 422, 423 sind parallel zur Hohlwelle 401 ausgerichtet. Jede der Teilscheiben 421, 422, 423 besteht aus einem Magnetkörper mit in Umfangsrichtung abwechselnd angeordneten Magnetpolen (Nord-Süd), im einfachsten Fall sind die Teilscheiben 421, 422, 423 jeweils als kurze Stabmagnete mit einem einzigen Nord- und Südpol ausgeführt. Die magnetischen Teilungen der Teilscheiben 421, 422, 423 sind in einer gemeinsamen Ebene angeordnet.

Die Teilscheibe 421 dreht sich in diesem Beispiel um den Faktor 16 langsamer als die Hohlwelle 401, die weiteren Getriebestufen führen zu einer weiten Reduzierung der Drehzahlen der entsprechenden Teilscheiben 422, 423.

Durch Detektoreinrichtungen, hier Hallsensoren, an der Oberseite der Platine 414, die in der Figur 7 nicht dargestellt sind, werden die Winkelpositionen der Teilscheiben 421, 422, 423 bestimmt. Die Teilscheiben 421, 422, 423 dienen also zur Messung der Anzahl der Umdrehungen der Hohlwelle 401, wobei jede Teilscheibe 421, 422, 423 über das Untersetzungsgetriebe von der jeweils vorgeschalteten Getriebestufe untersetzt angetrieben wird. Zum platzsparenden Aufbau sind die Teilscheiben 421, 422, 423, wie auch das Drehlager P der Drehachse 203 des Abtriebsrads 200, innerhalb des Umfangsbereiches der Codescheibe 402 angeordnet.

Anstelle von Hall-Sensoren als Detektoreinrichtungen können auch magnetoresistive Sensoren, wie AMR- ,GMR- (Giant Magneto Resistive) oder TMR-Sensoren (Tunnel Magneto Resistive) eingesetzt werden.

Das Abtriebsrad 200 ist im beschriebenen Beispiel zwischen dem Antriebsrad 100 und der Platine 414 eingebaut. Durch diese Konfiguration und dadurch, dass die magnetischen Teilungen der Teilscheiben 421, 422, 423 in einer Ebene angeordnet sind, können die dazugehörigen Detektoreinrichtungen relativ einfach auf der Oberseite der Platine 414 untergebracht werden. Auf der Unterseite der Platine 414 sind, wie oben beschrieben, die entsprechenden Fotodetektoren angebracht. Es können beide Seiten der Platine 414 mit elektronischen Bausteinen bestückt werden, was insbesondere Vorteile bezüglich des Raumbedarfs als auch der Wirtschaftlichkeit der Herstellung hat.

Die Komponenten der optische Abtastung (insbesondere die Lichtquelle 411, die Linse 412, die Abtastplatte 413 und die Codescheibe 402) befinden sich bei dem Drehgeber 400 gemäß der Figur 7 also unterhalb der Platine 414, wobei die Fotoelemente an der Unterseite der Platine 414 angebracht sind. An der Oberseite der Platine 414 sind unter anderem die Detektoreinrichtungen für die Erfassung der Drehstellungen der Teilscheiben 421, 422, 423 befestigt. Über der Platine ist gemäß Figur 7 das neuartige Getriebe und die weiteren Getriebestufen angebracht. Das Abtriebsrad 200, welches wie das Antriebsrad 100 Bestandteil des neuartigen Getriebes ist, ragt nicht über den Außendurchmesser des Gehäuses 410 hervor, wobei hier ein Gehäuse 410 eines konventionellen Drehgebers verwendet werden kann, weil das neuartige Getriebe die radialen Abmaße des Drehgebers 400 im Vergleich zu früher verwendeten nicht vergrößert. Über dem Abtriebsrad 200 ist das Antriebsrad 100 des Getriebes angeordnet, das so bemessen ist, dass dessen Durchmesser nicht größer ist als derjenige des Gehäuses 410. Durch die beschriebene Bauweise ist kann also ein Drehgeber 400 geschaffen werden, der sowohl in Radial- als auch Axialrichtung überaus geringe Baumaße aufweist und mit einem Getriebe mit den bereits genannten Vorteilen ausgestattet ist.

Besonders vorteilhaft bei dem beschriebenen Aufbau ist es, wie bereits erwähnt, dass das Abtriebsrad 200 so angeordnet ist, dass es nicht oder nur unwesentlich über den Außendurchmesser des Körpers 106 des Antriebsrads 100 hinausragt. Mit anderen Worten ist der Abstand zwischen dem Lager P und der Drehachse 103 des Antriebsrads nicht größer als der halbe Außendurchmesser des Körpers 106 des Antriebsrads 100. Im gezeigten Beispiel ist auch der Abstand zwischen dem Lager P und der Drehachse 103 des Antriebsrads nicht größer als der halbe Außendurchmesser der Codescheibe 402. Für den Fall, dass zwei oder mehrere Lager P vorliegen, in der die Drehachse 203 des Abtriebsrads 200 gelagert ist, ist für diese Betrachtung dasjenige Lager P mit dem kürzesten Abstand zu Drehachse 103 zu berücksichtigen, sofern die Drehachse 203 des Abtriebsrads 200 entsprechend schief zur Drehachse 103 des Antriebsrads 100 angeordnet ist. Durch Erfüllung dieser Kriterien weist die Anordnung der Drehgeber einen vergleichsweise geringen Durchmesser auf.

Die Anwendung des Getriebes ist nicht auf Drehgeber beschränkt, deren inkrementale Abtastung auf einem optischen Prinzip beruht oder deren Zählung der Umdrehungen auf einem magnetischen Abtastprinzip basiert. Ebenso sind hier unter anderem auch kapazitiv oder induktiv wirkende Drehgeber mit eingeschlossen.

**Patentansprüche**

1. Getriebe bestehend aus einem drehbaren Antriebselement (100) und einem drehbaren Abtriebselement (200), wobei

   - an einer Stirnseite des Antriebselements (100) zumindest ein Kraftübertragungsmittel (101, 102) entlang mindestens einer Spirallinie angeordnet ist, und
   - an einer Stirnseite des Abtriebselements (200) Kraftübertragungsmittel (201, 202) entlang einer umlaufenden Linie angeordnet sind und

   ein Drehmoment durch die Wechselwirkung dieser Kraftübertragungsmittel (101, 102 ; 201, 202) vom Antriebselement (100) zum Abtriebselement (200) übertragen wird, wobei dieses Drehmoment eine Drehbewegung im Abtriebselement (200) bewirkt, so dass dessen Drehzahl kleiner ist als die Drehzahl des Antriebselements (100), **dadurch gekennzeichnet, dass** die Kraftübertragungsmittel (101, 102; 201, 202) des Antriebselements (100) und/oder des Abtriebselements (200) Permanentmagneten sind und das Drehmoment berührungslos über, insbesondere abstoßende, Magnetkräfte übertragbar ist, wobei die Permanentmagneten (101, 102; 201, 202) des Antriebselements (100) und/oder des Abtriebselements (200) auf einem Trägerkörper (106, 206) angeordnet sind, dessen Werkstoff eine relative Permeabilitätszahl größer 10, insbesondere größer 100 aufweist.

2. Getriebe nach Anspruch 1, wobei die Spirallinie durch die Gleichung

$$r = a \cdot \varphi$$

   beschrieben ist, wobei
   r = der Radius der Spirale und $\alpha$ eine konstante positive Zahl und $\varphi$ der Schwenkwinkel eines Radialstrahls ausgehend vom Pol der Spirallinie ist.

3. Getriebe nach einem der vorhergehenden Ansprüche, wobei die Anzahl der Kraftübertragungsmittel (201, 202) des Abtriebselements (200) größer ist als die wirksame Gangzahl der Spirallinie des Antriebselements (100).

4. Getriebe nach einem der vorhergehenden Ansprüche, wobei der größte Abstand zwischen der Drehachse (203) des Abtriebselements (200) und der Außenkontur (207) der Kraftübertragungsmittel (201, 202) des Abtriebselements (200) kleiner ist als der Abstand zwischen den Drehachsen (103; 203) des Antriebselements (100) und des Abtriebselements (200) im Bereich des Abtriebselements (200).

5. Getriebe gemäß einem der vorhergehenden Ansprüche, wobei auf mindestens einem Permanentmagneten (101, 102) des Antriebselements (100) auf der Seite, die dem Abtriebselements (200) zugewandt ist eine Schicht (104) aufgebracht ist, die aus einem Werkstoff besteht, der ferromagnetische Eigenschaften aufweist.

6. Getriebe gemäß einem der vorhergehenden Ansprüche, wobei die Permanentmagneten des Antriebselements (100) auf mehreren Spirallinien angeordnet sind und die Permanentmagneten unterschiedliche Steghöhen (H, h) aufweisen.

7. Getriebe gemäß einem der vorhergehenden Ansprüche, wobei, insbesondere am Abtriebselement (200), zusätzliche Kraftübertragungsmittel (204) angeordnet sind, über die ein Drehmoment vom Antriebselement (100) zum Abtriebselement (200) berührend übertragbar ist.

8. Getriebe nach Anspruch 7, wobei durch die zusätzlichen Kraftübertragungsmittel (204) das Drehmoment vom Antriebselement (100) zum Abtriebselement (200) sowohl berührungslos als auch berührend übertragbar ist.

9. Getriebe gemäß einem der vorhergehenden Ansprüche, wobei im Bereich zwischen dem Antriebselement (100) und dem Abtriebselement (200) sowohl ein magnetisch abgeschirmter Teilbereich als auch ein nicht abgeschirmter Teilbereich angeordnet ist.

10. Getriebe nach Anspruch 9, wobei die Abschirmung durch ein ferromagnetisches, insbesondere weichmagnetisches, Blech (300) vorgenommen wird und der magnetisch nicht abgeschirmte Teilbereich ein Fenster (301) in diesem Blech (300) ist.

11. Getriebe gemäß einem der vorhergehenden Ansprüche, wobei Kraftübertragungsmittel (101, 102) des Antriebselements (100) als Hohlkehle und Kraftübertragungsmittel (201) des Abtriebselements (200) als Ausnehmungen in denen Kugelelemente (208) gelagert sind ausgebildet sind.

12. Drehgeber mit einer oder mehreren Getriebestufen, wobei mindestens eine der Getriebestufen ein Getriebe nach Anspruch 1 ist und aus einem drehbaren Antriebselement (100) und einem drehbaren Abtriebselement (200) besteht, und

   - an einer Stirnseite des Antriebselements (100) zumindest ein Kraftübertragungsmittel (101, 102) entlang mindestens einer Spirallinie angeordnet ist, und
   - an einer Stirnseite des Abtriebselements (200) Kraftübertragungsmittel (201, 202) entlang einer umlaufenden Linie angeordnet sind und

   ein Drehmoment durch die Wechselwirkung dieser Kraftübertragungsmittel (101, 102 ; 201, 202) vom Antriebselement (100) zum Abtriebselement (200) übertragen wird, wobei dieses Drehmoment eine Drehbewegung im Abtriebselement (200) bewirkt, so dass dessen Drehzahl kleiner ist als die Drehzahl des Antriebselements (100), **dadurch gekennzeichnet, dass** der kürzeste Abstand zwischen der Drehachse 103 des Antriebsrads 100 und dem Punkt P, an welchem das Abtriebsrad 200 gelagert ist, nicht größer ist als der halbe Durchmesser der Codescheibe 402.

13. Drehgeber gemäß Anspruch 12, wobei das Abtriebsrad (200) zwischen dem Antriebsrad (100) und einer Platine (414) angeordnet ist.

14. Drehgeber gemäß Anspruch 12 oder 13, wobei der kürzeste Abstand zwischen der Drehachse (103) des Antriebsrads (100) und dem Punkt P, an welchem das Abtriebsrad (200) gelagert ist, nicht größer ist als der halbe Durchmesser des Körpers 106 des Antriebsrads 100.

**Claims**

1. Gear mechanism composed of a rotary drive element (100) and a rotary output element (200), wherein

   - at least one force-transmitting means (101, 102) is arranged on an end side of the drive element (100), along at least one spiral line, and
   - force-transmitting means (201, 202) are arranged on an end side of the output element (200), along a circumferential line, and

   a torque is transmitted from the drive element (100) to the output element (200) through the interaction of these force-transmitting means (101, 102; 201, 202), wherein this torque brings about a rotational movement in the output element (200), with the result that the rotational speed thereof is lower than the rotational speed of the drive element (100), **characterized in that** the force-transmitting means (101, 102; 201, 202) of the drive element (100) and/or of the output element (200) are permanent magnets, and the torque can be transmitted in a contactless fashion via, in particular, repelling, magnetic forces, wherein the permanent magnets (101, 102; 201, 202) of the drive element (100) and/or of the output element (200) are arranged on a carrier body (106, 206), the material of which has a relative permeability which is greater than 10, in particular greater than 100.

2. Gear mechanism according to Claim 1, wherein the spiral line is described by the equation

$$r = \alpha \cdot \varphi,$$

wherein r = the radius of the spiral and $\alpha$ is a constant positive number and $\varphi$ is the pivoting angle of a radial beam starting from the pole of the spiral line.

3. Gear mechanism according to one of the preceding claims, wherein the number of force-transmitting means (201, 202) of the output element (200) is greater than the effective flight number of the spiral line of the drive element (100).

4. Gear mechanism according to one of the preceding claims, wherein the greatest distance between the rotational axis (203) of the output element (200) and the outer contour (207) of the force-transmitting means (201, 202) of the output element (200) is smaller than the distance between the rotational axes (103; 203) of the drive element (100) and of the output element (200) in the region of the output element (200).

5. Gear mechanism according to one of the preceding claims, wherein a layer (104), which is composed of a material which has ferromagnetic properties, is applied to at least one permanent magnet (101, 102) of the drive element (100), on the side which faces the output element (200).

6. Gear mechanism according to one of the preceding claims, wherein the permanent magnets of the drive element (100) are arranged on a plurality of spiral lines, and the permanent magnets have different web heights (H, h).

7. Gear mechanism according to one of the preceding claims, wherein arranged, in particular, on the output element (200) are additional force-transmitting means (204) via which a torque can be transmitted from the drive element (100) to the output element (200) in a contact-forming fashion.

8. Gear mechanism according to Claim 7, wherein the torque can be transmitted from the drive element (100) to the output element (200) by the additional force-transmitting means (204), both in a contactless fashion and in a contact-forming fashion.

9. Gear mechanism according to one of the preceding claims, wherein both a magnetically screened partial region and a non-screened partial region are arranged in the region between the drive element (100) and the output element (200).

10. Gear mechanism according to Claim 9, wherein the screening is implemented by means of a ferromagnetic, in particular soft-magnetic, piece of sheet metal (300), and the magnetically non-screened partial region is a window (301) in this piece of sheet metal (300).

11. Gear mechanism according to one of the preceding claims, wherein force-transmitting means (101, 102) of the drive element (100) are embodied as deep chamfers, and force-transmitting means (201) of the output element (200) as cutouts in which ball elements (208) are mounted.

12. Rotary encoder having one or more gear stages, wherein at least one of the gear stages is a gear mechanism according to Claim 1 and is composed of a rotary drive element (100) and a rotary output element (200), and

   - at least one force-transmitting means (101, 102) is arranged on an end side of the drive element (100), along at least one spiral line, and
   - force-transmitting means (201, 202) are arranged on an end side of the output element (200), along a circumferential line, and

   a torque is transmitted from the drive element (100) to the output element (200) through the interaction of these force-transmitting means (101, 102; 201, 202), wherein this torque brings about a rotational movement in the output element (200), with the result that the rotational speed thereof is lower than the rotational speed of the drive element (100),
   **characterized in that** the shortest distance between the rotational axis (103) of the drive wheel (100) and the point P at which the output wheel (200) is mounted is not greater than half the diameter of the code disc (402).

13. Rotary encoder according to Claim 12, wherein the output wheel (200) is arranged between the drive wheel (100) and a circuit board (414).

14. Rotary encoder according to either of Claims 12 and 13, wherein the shortest distance between the rotational axis (103) of the drive wheel (100) and the point P at which the output wheel (200) is mounted is not greater than half the diameter of the body (106) of the drive wheel (100).

**Revendications**

1. Transmission constituée d'un élément rotatif d'entraînement (100) et d'un élément rotatif entraîné (200), dans laquelle au moins un moyen (101, 102) de transfert de force est disposé le long d'au moins une ligne en spirale sur un côté frontal de l'élément d'entraînement (100) et
   des moyens (201, 202) de transfert de force sont disposés le long d'une ligne périphérique sur un côté frontal de l'élément entraîné (200),
   un couple de rotation étant transmis par l'interaction entre ces moyens (101, 102; 201, 202) de transfert de force entre l'élément d'entraînement (100) et l'élément entraîné (200), ce couple de rotation ayant pour effet un déplacement de rotation de l'élément entraîné (200) tel que la vitesse de rotation soit inférieure à la vitesse de rotation de l'élément d'entraînement (100),
   **caractérisée en ce que**
   les moyens (101, 102; 201, 202) de transfert de force de l'élément d'entraînement (100) et/ou de l'élément entraîné (200) sont des aimants permanents et le couple de rotation peut être transféré sans contact par l'intermédiaire de forces magnétiques en particulier répulsives, les aimants permanents (101, 102; 201, 202) de l'élément d'entraînement (100) et/ou de l'élément entraîné (200) étant disposés sur un corps de support (106, 206) dont les matériaux présentent un indice de perméabilité relative supérieur à 10 et en particulier supérieur à 100.

2. Transmission selon la revendication 1, dans laquelle la ligne en spirale est décrite par l'équation

$$r = a.\varphi$$

dans laquelle r = le rayon de la spirale, a un nombre positif constant et $\varphi$ l'angle de pivotement d'un faisceau radial partant du pôle de la ligne en spirale.

3. Transmission selon l'une des revendications précédentes, dans laquelle le nombre des moyens (201, 202) de transfert de force de l'élément entraîné (200) est supérieur au pas effectif de la ligne en spirale de l'élément d'entraînement (100).

4. Transmission selon l'une des revendications précédentes, dans laquelle la plus grande distance entre l'axe de rotation (203) de l'élément entraîné (200) et le contour extérieur (207) des moyens (201, 202) de transfert de force de l'élément entraîné (200) est plus petite que la distance entre les axes de rotation (103; 203) de l'élément d'entraînement (100) et de l'élément entraîné (200) au niveau de l'élément entraîné (200).

5. Transmission selon l'une des revendications précédentes, dans laquelle une couche (104) constituée d'un matériau qui présente des propriétés ferromagnétiques est appliquée sur au moins un aimant permanent (101, 102) de l'élément d'entraînement (100), sur le côté tourné vers l'élément entraîné (200).

6. Transmission selon l'une des revendications précédentes, dans laquelle les aimants permanents de l'élément d'entraînement (100) sont disposés sur plusieurs lignes en spirale et les aimants permanents présentent différentes hauteurs de nervure (H, h).

7. Transmission selon l'une des revendications précédentes, dans laquelle des moyens supplémentaires de transfert de force (204) par lesquels un couple de rotation peut être transféré par contact entre l'élément d'entraînement (100) et l'élément entraîné (200) sont disposés en particulier sur l'élément entraîné (200).

8. Transmission selon la revendication 7, dans laquelle le couple de rotation de l'élément d'entraînement (100) vers l'élément entraîné (200) peut être transféré à la fois sans contact et par contact grâce aux moyens supplémentaires (204) de transfert de force.

9. Transmission selon l'une des revendications précédentes, dans laquelle une partie blindée magnétiquement et une partie non blindée magnétiquement sont disposées dans la partie située entre l'élément d'entraînement (100) et l'élément entraîné (200).

10. Transmission selon la revendication 9, dans laquelle le blindage est réalisé par une tôle ferromagnétique et en particulier à magnétisme doux (300), la partie non blindée magnétiquement étant une fenêtre (301) ménagée dans cette tôle (300).

11. Transmission selon l'une des revendications précédentes, dans laquelle les moyens (101, 102) de transfert de force de l'élément d'entraînement (100) sont configurées comme biseaux creux et les moyens (201) de transfert de force de l'élément entraîné (200) comme découpes dans lesquelles des éléments sphériques (208) sont montés.

12. Capteur de rotation présentant un ou plusieurs étages de transmission, au moins l'un des étages de transmission étant une transmission selon la revendication 1 et étant constitué d'un élément rotatif d'entraînement (100) et d'un élément rotatif entraîné (200),
au moins un moyen (101, 102) de transfert de force est disposé le long d'au moins une ligne en spirale sur un côté frontal de l'élément d'entraînement (100) et
des moyens (201, 202) de transfert de force sont disposés le long d'une ligne périphérique sur un côté frontal de l'élément entraîné (200),
un couple de rotation étant transmis par l'interaction entre ces moyens (101, 102; 201, 202) de transfert de force entre l'élément d'entraînement (100) et l'élément entraîné (200), ce couple de rotation ayant pour effet un déplacement de rotation de l'élément entraîné (200) tel que la vitesse de rotation soit inférieure à la vitesse de rotation de l'élément d'entraînement (100),
**caractérisé en ce que**
la plus courte distance entre l'axe de rotation (103) de la roue d'entraînement (100) et le point P auquel la roue entraînée (200) est montée n'est pas supérieure au demi-diamètre du disque de codage (402).

13. Capteur de rotation selon la revendication 12, dans lequel la roue entraînée (200) est disposée entre la roue d'entraînement (100) et une carte de circuit (414).

14. Capteur de rotation selon les revendications 12 ou 13, dans lequel la distance la plus courte entre l'axe de rotation (103) de la roue d'entraînement (100) et le point P auquel la roue entraînée (200) est montée n'est pas supérieure au demi-diamètre du corps (106) de la roue d'entraînement (100).

FIG. 1a

FIG. 1b

## FIG. 1c

FIG. 2a

FIG. 2b

FIG. 2c

FIG. 2d

FIG. 2e

FIG. 3a

101

104

200

204

203

∝

100

103

206

FIG. 3b

101

200

100

206

204

102

FIG. 3c

FIG. 3d

FIG. 3e

FIG. 4

FIG. 5a

FIG. 5b

FIG. 6a

201
208
200
203

FIG. 6b

201
208
203
200

23

FIG. 6c

# FIG. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19820014 A1
- DE 2426125 A
- DE 19745177 A1
- US 3814962 A
- JP 3568356 A